# EUROPEAN PATENT APPLICATION

(11) **EP 4 807 848 A1**
(43) Date of publication of application: **16.09.2026**
(21) Application number: 24888833.1
(22) Date of filing: 08.11.2024
(51) Int. Cl.: H01M 10/0567, H01M 10/052

(54) **NONAQUEOUS ELECTROLYTE AND NONAQUEOUS ELECTROLYTE SECONDARY CELL**

(30) Priority: 10.11.2023 JP 2023192038
(71) Applicant: Panasonic Intellectual Property Management Co., Ltd., Kadoma-shi, Osaka 571-0057 (JP)
(72) Inventor: SAKO Honami, Kadoma-shi, Osaka 571-0057 (JP); HARA Kohei, Kadoma-shi, Osaka 571-0057 (JP)
(74) Representative: Novagraaf International SA
(86) International application number: PCT/JP2024/039889
(87) International publication number: WO 2025/100542

(57) **Abstract**

A nonaqueous electrolyte solution according to the present disclosure includes a nonaqueous solvent, particles of a phosphorus-containing compound insoluble in the nonaqueous solvent, and a polymer dissolved in the nonaqueous solvent. The polymer may include a boronic acid ester structure in a repeating unit. The phosphorus-containing compound may include at least one selected from the group consisting of Li₃PO₄, Na₃PO₄, LiPO₃, LiPO₃F, metaphosphoric acid, and P₂O₅.

## Description

### TECHNICAL FIELD

The present disclosure relates to a nonaqueous electrolyte solution and a nonaqueous electrolyte secondary battery.

### BACKGROUND ART

As is known to those skilled in the art, in conventional batteries, the electrolyte may be decomposed by the active material. The decomposition of the electrolyte leads to disadvantages such as an increase in the internal resistance of the battery and a deterioration in the cycle characteristics of the battery.

Patent Literature 1 discloses that a nonaqueous electrolyte secondary battery including vinylene carbonate as a nonaqueous solvent has favorable cycle characteristics.

### CITATION LIST

### Patent Literature

Patent Literature 1: JP 2005-268230 A

### SUMMARY OF INVENTION

### Technical Problem

The present disclosure provides a nonaqueous electrolyte solution having enhanced dispersion stability.

### Solution to Problem

The present disclosure provides a nonaqueous electrolyte solution including:
a nonaqueous solvent;
particles of a phosphorus-containing compound insoluble in the nonaqueous solvent; and
a polymer dissolved in the nonaqueous solvent.

### Advantageous Effects of Invention

According to the technique of the present disclosure, a nonaqueous electrolyte solution having enhanced dispersion stability can be provided.

### BRIEF DESCRIPTION OF DRAWINGS

FIG. 1 is a diagram showing structures contained in polymers obtained from PVA and various boronic acids.

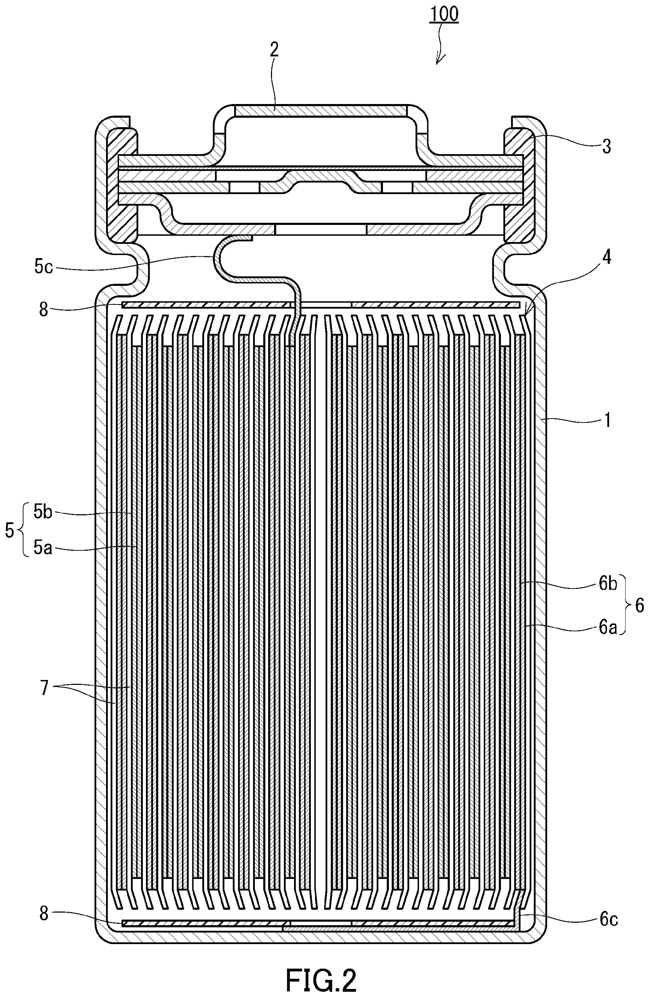

FIG. 2 is a cross-sectional view schematically showing an example of a nonaqueous electrolyte secondary battery according to Embodiment 2.

### DESCRIPTION OF EMBODIMENTS

### (Findings Underlying the Present Disclosure)

The group of the present inventors has found that the cycle characteristics of a battery are enhanced by dispersing, in a nonaqueous solvent, particles of a phosphorus-containing compound insoluble in the nonaqueous solvent. However, particles of a phosphorus-containing compound tend to settle. When the particles of the phosphorus-containing compound settle, it is difficult to inject a nonaqueous electrolyte solution having a uniform composition into a battery casing. Therefore, enhancement of the dispersion stability of the nonaqueous electrolyte solution is required.

Embodiments of the present disclosure are described below with reference to the drawings. The present disclosure is not limited to the embodiments described below.

### (Embodiment 1)

A nonaqueous electrolyte solution according to Embodiment 1 includes a nonaqueous solvent, particles of a phosphorus-containing compound insoluble in the nonaqueous solvent, and a polymer dissolved in the nonaqueous solvent. By including the polymer dissolved in the nonaqueous solvent, the nonaqueous electrolyte solution according to Embodiment 1 can enhance dispersion stability and can reduce agglomeration of the particles of the phosphorus-containing compound and the resulting settling of the particles. Here, when a battery using the nonaqueous electrolyte solution according to Embodiment 1 is operated, the particles of the phosphorus-containing compound dispersed in the nonaqueous electrolyte solution form a coating film on the surface of the positive electrode. Accordingly, oxidative decomposition of the solvent at the interface between the nonaqueous electrolyte solution and the positive electrode can be suppressed. Furthermore, even when the coating film becomes damaged over time and through repeated charging and discharging, the particles of the phosphorus-containing compound dispersed in the nonaqueous electrolyte solution are capable of repairing the coating film. Accordingly, a battery using the nonaqueous electrolyte solution of the present disclosure can achieve an effect of suppressing the oxidative decomposition of the solvent for a long period of time and can enhance cycle characteristics, as compared with, for example, a battery in which a coating film is directly formed on the positive electrode during assembly. The nonaqueous electrolyte solution of the present disclosure having enhanced particle dispersibility can enhance the industrial productivity of the nonaqueous electrolyte solution and a battery using the same, such as the battery described above.

The nonaqueous electrolyte solution according to Embodiment 1 is, at 25°C, for example, in a liquid state. The term "liquid state" includes sols. That is, the nonaqueous electrolyte solution according to Embodiment 1 may be a nonaqueous colloidal solution in which the particles of the phosphorus-containing compound are dispersed.

In the present disclosure, the term "particles of a phosphorus-containing compound insoluble in a nonaqueous solvent" means particles of a phosphorus-containing compound for which 100 mL or more of a nonaqueous solvent is required to dissolve 1 g at 25°C. That is, the solubility of the particles of the phosphorus-containing compound in 100 mL of the nonaqueous solvent is 1 g or less. Here, the term "dissolve" means that, when the particles of the phosphorus-containing compound are added to the nonaqueous solvent in a container for dissolution, both of the following are satisfied: the resulting solution exhibits no change in transmittance relative to the solvent, that is, the solution exhibits no turbidity; and no sediment is observed on the bottom surface of the container after standing for 24 hours.

The particles of the phosphorus-containing compound may be particles of a phosphorus-containing compound having a solubility of 0.1 g or less in 100 mL.

Examples of the phosphorus-containing compound include an inorganic phosphorus compound. The phosphorus-containing compound may include phosphoric acid or a phosphate compound. Examples of the phosphate compound include an inorganic phosphate. The phosphoric acid may include phosphorous acid, and the phosphate compound may include a phosphite. The phosphorus-containing compound desirably includes a PO₄ skeleton. The phosphorus-containing compound may include an organophosphorus compound. Examples of the organophosphorus compound include a phosphate ester including a PO₄ skeleton.

The phosphorus-containing compound may include at least one selected from the group consisting of Li₃PO₄, Na₃PO₄, K₃PO₄, LiPO₃, LiPO₃F, metaphosphoric acid, P₂O₅, and calcium phosphate. Examples of the calcium phosphate include hydroxyapatite. The phosphorus-containing compound may include at least one selected from the group consisting of Li₃PO₄, Na₃PO₄, K₃PO₄, LiPO₃, LiPO₃F, metaphosphoric acid, and P₂O₅. The phosphorus-containing compound may include at least one selected from the group consisting of Li₃PO₄, Na₃PO₄, LiPO₃, LiPO₃F, metaphosphoric acid, and P₂O₅.

The phosphorus-containing compound may include Li₃PO₄. That is, the nonaqueous electrolyte solution according to Embodiment 1 may include particles of Li₃PO₄. According to the above configuration, the cycle characteristics of a battery can be enhanced.

The content of the particles of the phosphorus-containing compound in the nonaqueous electrolyte solution according to Embodiment 1 may be 0.1 vol% or more and 10 vol% or less. The content of the particles of the phosphorus-containing compound may be 0.1 vol% or more and 8 vol% or less, 0.5 vol% or more and 6 vol% or less, 1 vol% or more and 5 vol% or less, or 1 vol% or more and 4 vol% or less. According to the above configuration, favorable dispersibility of the particles of the phosphorus-containing compound and favorable fluidity of the nonaqueous electrolyte solution can be achieved.

The content of the particles of the phosphorus-containing compound in the nonaqueous electrolyte solution according to Embodiment 1 can be determined, for example, by the following method. The volume of the nonaqueous electrolyte solution is measured, and then the nonaqueous electrolyte solution is filtered through a filter to separate the particles. The separated particles are washed with a solvent such as dimethyl carbonate, followed by evaporation of the washing solvent and drying, after which the mass of the particles is measured. The volume of the particles is calculated from the mass of the particles and the specific gravity determined from the components of the particles. The components of the particles can be determined by any of various analytical methods, such as inductively coupled plasma spectrometry (ICP), X-ray diffractometry (XRD), infrared absorption spectroscopy (IR), and nuclear magnetic resonance spectroscopy (NMR). Thus, the content of the particles of the phosphorus-containing compound in the nonaqueous electrolyte solution can be calculated. Additionally, the volume of the nonaqueous electrolyte solution can also be calculated from the composition and mass thereof. The composition of the nonaqueous electrolyte solution can be measured by liquid chromatography, gas chromatography, or the like.

The particles of the phosphorus-containing compound may be nanoparticles.

The average particle diameter of the particles of the phosphorus-containing compound may be 1 nm or more and 500 nm or less. According to the above configuration, the particles of the phosphorus-containing compound in the nonaqueous electrolyte solution have enhanced dispersibility, making it possible to enhance the industrial productivity of the nonaqueous electrolyte solution. The average particle diameter of the particles of the phosphorus-containing compound may be 5 nm or more and 400 nm or less, or 10 nm or more and 300 nm or less. When the average particle diameter of the particles of the phosphorus-containing compound is 500 nm or less, in a battery using the nonaqueous electrolyte solution of the present disclosure, during permeation of the nonaqueous electrolyte solution into the positive electrode active material layer, the particles of the phosphorus-containing compound can penetrate between the positive electrode active material particles disposed within the positive electrode active material layer. Accordingly, a coating film of the phosphorus-containing compound is also formed on the surface of the positive electrode active material disposed within the positive electrode active material layer, and therefore, the oxidative decomposition of the solvent within the positive electrode active material layer can be suppressed.

The average particle diameter of the particles of the phosphorus-containing compound may be equal to or smaller than the pore diameter of the separator in a battery using the nonaqueous electrolyte solution. According to the above configuration, the particles of the phosphorus-containing compound do not clog the pores of the separator, and accordingly, the circulation of the electrolyte solution within the electrode group is not hindered even during charging and discharging.

In the present disclosure, the average particle diameter refers to the median diameter (d50). The median diameter is the particle diameter at a cumulative volume equal to 50% in the volume-based particle size distribution. The volume-based particle size distribution can be determined by laser diffraction scattering using a commercially available laser diffractometer.

The polymer dissolved in the nonaqueous solvent exerts an effect of suppressing the settling of the particles of the phosphorus-containing compound through interaction between the dissolved polymer and the particles of the phosphorus-containing compound.

The polymer can include a boronic acid ester structure in a repeating unit. Boron contained in the boronic acid ester structure is in an electron-deficient state because the boron has an empty p orbital. In contrast, oxygen atoms contained in the phosphorus-containing compound have lone pairs and a high electron density. Accordingly, an electrostatic interaction between the boron and the oxygen atoms causes the polymer to adsorb onto the surfaces of the particles of the phosphorus-containing compound, and the steric hindrance effect of the polymer hinders agglomeration of the particles of the phosphorus-containing compound. Consequently, it is presumed that an effect of suppressing the settling of the particles of the phosphorus-containing compound is exhibited.

Since boronic acids have excellent oxidation resistance, the polymer including the boronic acid ester structure can also have excellent oxidation resistance. Since a wide variety of boronic acid analogs exist, the structure of the polymer can be designed according to the nonaqueous solvent.

The polymer may include a structure represented by the following formula (1). At least one selected from the group consisting of X₁ and X₂ represents a bond to a carbon atom contained in the polymer. The carbon atom contained in the polymer is, for example, a carbon atom contained in the main chain of the polymer. When only X₁ represents a bond to a carbon atom contained in the polymer, X₂ is a hydrogen atom of a hydroxy group, and R is an optionally substituted alkyl group or an optionally substituted aryl group. When the polymer includes such a structure, an effect of suppressing the settling of the particles of the phosphorus-containing compound can be sufficiently achieved.

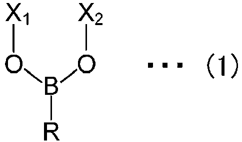

In the formula (1), when both X₁ and X₂ represent bonds to carbon atoms contained in the polymer, a repeating unit of the polymer has a cyclic ester. When only X₁ represents a bond to a carbon atom contained in the polymer, a repeating unit of the polymer has an acyclic ester. The boronic acid ester can be an ester obtained from a boronic acid represented by R-B(OH)₂ and an alcohol.

R in the formula (1) may be represented by the following formula (2). In the formula (2), X₃ represents a bond to a boron atom. When the polymer includes such a structure, an effect of suppressing the settling of the particles of the phosphorus-containing compound can be sufficiently achieved.

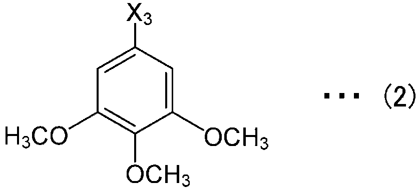

The type of the raw material polymer is not particularly limited as long as a boronic acid can be bonded by dehydration condensation. Specifically, the type of the raw material polymer is not particularly limited as long as the raw material polymer has a hydroxy group in a repeating unit. Examples of the raw material polymer include polyvinyl alcohol (PVA) and polysaccharides. Examples of the polysaccharides include guar gum, xanthan gum, and locust bean gum. A plurality of types of raw material polymers may be used.

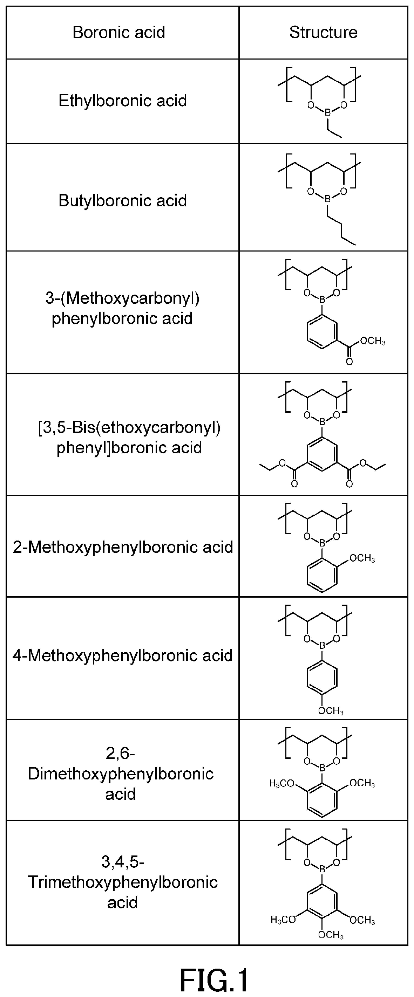

FIG. 1 is a diagram showing structures contained in polymers obtained from PVA and various boronic acids. Examples of the boronic acid include ethylboronic acid, butylboronic acid, 3-(methoxycarbonyl)phenylboronic acid, [3,5-bis(ethoxycarbonyl)phenyl]boronic acid, 2-methoxyphenylboronic acid, 4-methoxyphenylboronic acid, 2,6-dimethoxyphenylboronic acid, and 3,4,5-trimethoxyphenylboronic acid. One boronic acid or two or more boronic acids selected from the above may be used.

The polymer may have a weight-average molecular weight in a range of 10,000 to 600,000. When the weight-average molecular weight of the polymer is in such a range, the polymer can be easily dissolved in the nonaqueous solvent.

The above polymer is obtained by bonding a boronic acid to a raw material polymer having a hydroxy group in a repeating unit through esterification. For example, the esterification reaction can be allowed to proceed by adding a boronic acid to a DMSO solution of the raw material polymer. The pH of the reaction solution may be adjusted as necessary. The amount of the boronic acid can be determined according to the number of hydroxy groups in the raw material polymer. For example, assuming that all the hydroxy groups contained in PVA as the raw material polymer react with molecules of the boronic acid to form a cyclic ester structure, the amount of substance of the boronic acid equal to one-half of the amount of substance of the hydroxy groups is required.

The content of the polymer in the nonaqueous electrolyte solution may be in a range of 0.1 mass% to 5 mass% or in a range of 0.5 mass% to 1.0 mass%. By adjusting the content of the polymer to a desired range, an effect of suppressing the settling of the particles of the phosphorus-containing compound is enhanced.

The weight-average molecular weight and content of the polymer can be measured by isolating the polymer from the nonaqueous electrolyte solution. First, the solids contained in the nonaqueous electrolyte solution, namely the particles of the phosphorus-containing compound, are removed from the nonaqueous electrolyte solution using a centrifuge and/or a filter. Next, the polymer is separated from the nonaqueous electrolyte solution using gel permeation chromatography (GPC) with a column or using a dialysis membrane. By evaporating the low-boiling dialysis solution and the solvent used for the separation, the polymer can be isolated.

The nonaqueous electrolyte solution of the present embodiment may be free of a solvent containing a halogen element (particularly fluorine). For example, fluoroethylene carbonate (FEC) and hydrofluoroether (HFE) exhibit an effect of suppressing the settling of the particles of the phosphorus-containing compound. However, these materials are expensive and raise concerns about environmental burden. According to the nonaqueous electrolyte solution of the present embodiment, even without these halogen-containing compounds, an effect of suppressing the settling of the particles of the phosphorus-containing compound can be obtained. The nonaqueous electrolyte solution of the present embodiment may be halogen-free.

The nonaqueous solvent is not particularly limited, and for example, a cyclic carbonate, a chain carbonate, or a cyclic carboxylic acid ester is used.

Examples of cyclic carbonates include propylene carbonate (PC) and ethylene carbonate (EC).

Examples of chain carbonates include diethyl carbonate (DEC), ethyl methyl carbonate (EMC), and dimethyl carbonate (DMC).

Examples of cyclic carboxylic acid esters include γ-butyrolactone (GBL) and γ-valerolactone (GVL).

One nonaqueous solvent may be used alone, or two or more nonaqueous solvents may be used in combination. The nonaqueous solvent may include ethylene carbonate. In this case, the solubility of the electrolyte, such as lithium salt, in the nonaqueous solvent can be enhanced.

The nonaqueous electrolyte solution of the present embodiment may further include an electrolyte dissolved in the nonaqueous solvent. The electrolyte includes, for example, a lithium salt. Examples of the lithium salt include lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bis(perfluoroethylsulfonyl)imide (LiN(SO₂C₂F₅)₂), LiAsF₆, LiCF₃SO₃, and lithium difluoro(oxalato)borate. As the electrolyte, at least one selected from the substances described above as the lithium salt can be used. The lithium salt may contain fluorine (F). The lithium salt may be LiPF₆.

The concentration of the lithium salt in the nonaqueous electrolyte solution may be, for example, 0.5 mol/L or more and 2 mol/L or less. By controlling the concentration of the lithium salt within the above range, an electrolyte solution having excellent ionic conductivity and moderate viscosity can be obtained. However, the concentration of the lithium salt is not limited to the above range.

The nonaqueous electrolyte solution according to Embodiment 1 can be manufactured, for example, by the following method.

A lithium salt is dissolved in a solvent including a nonaqueous solvent. A polymer is mixed into the solution thus obtained and the polymer is dissolved therein by heating. The solution having the polymer dissolved therein, LiPO₄ particles or the like as the particles of the phosphorus-containing compound, and ZrO₂ balls as a mixing medium are mixed using a ball mill. The mixing medium is removed from the resulting liquid mixture. Thus, the nonaqueous electrolyte solution according to Embodiment 1 is obtained by dissolving the polymer.

The method for manufacturing the nonaqueous electrolyte solution is not limited to the one described above. For example, an ultrasonic homogenizer may be used to disperse the particles of the phosphorus-containing compound in a solvent having a lithium salt dissolved therein.

### (Embodiment 2)

A nonaqueous electrolyte secondary battery according to Embodiment 2 includes a positive electrode, a negative electrode, and the nonaqueous electrolyte solution according to Embodiment 1. By using the nonaqueous electrolyte solution according to Embodiment 1, the cycle characteristics of the secondary battery can be enhanced.

FIG. 1 is a cross-sectional view schematically showing an example of the nonaqueous electrolyte secondary battery according to Embodiment 2. A secondary battery 100 includes a container 1, an electrode group 4, and an electrolyte solution that is not shown. The electrolyte solution is the nonaqueous electrolyte solution according to Embodiment 1. The electrode group 4 has a wound structure. The electrode group 4 is housed in the container 1. The electrode group 4 includes a positive electrode 5, a negative electrode 6, and a pair of separators 7. The electrode group 4 is impregnated with the electrolyte solution. The opening of the container 1 is sealed with a sealing plate 2. The positive electrode 5 includes a positive electrode current collector 5a and a positive electrode active material layer 5b. To the positive electrode 5, one end of a positive electrode lead 5c is connected. The other end of the positive electrode lead 5c is connected to the back surface of the sealing plate 2. An insulating gasket 3 is disposed to surround the sealing plate 2. The negative electrode 6 includes a negative electrode current collector 6a and a negative electrode active material layer 6b. To the negative electrode 6, one end of a negative electrode lead 6c is connected. The other end of the negative electrode lead 6c is connected to the bottom surface of the container 1. An insulating ring 8 is disposed on each of the upper and lower surfaces of the electrode group 4.

The constituent elements of the secondary battery 100 are specifically described below.

As the positive electrode current collector 5a, a sheet or film formed of a metal material such as aluminum, stainless steel, titanium, or an alloy of any of these can be used. Aluminum and alloys thereof are inexpensive and can be easily formed into thin films and are accordingly suitable as materials of the positive electrode current collector 5a. The sheet or film may be porous or non-porous. As the sheet or film, a metal foil, a metal mesh, or the like is used. A carbon material, such as carbon, as a conductive auxiliary material may be applied to the surface of the positive electrode current collector 5a.

The positive electrode active material layer 5b includes a positive electrode active material. The positive electrode active material can be a material capable of occluding and releasing lithium ions. The positive electrode active material can be a lithium-containing transition metal oxide, a lithium-containing transition metal phosphate, a transition metal fluoride, a polyanion material, a fluorinated polyanion material, a transition metal sulfide, a transition metal oxysulfide, a transition metal oxynitride, or the like. In particular, when a lithium-containing transition metal oxide or a lithium-containing transition metal phosphate is used as the positive electrode active material, the battery manufacturing cost can be reduced and the average discharge voltage can be increased. Examples of lithium-containing transition metal oxides include lithium cobalt oxides, lithium nickel cobalt aluminum oxides, lithium nickel cobalt manganese oxides, and lithium nickel manganese oxides. Examples of lithium-containing transition metal phosphates include lithium iron phosphates, lithium vanadium phosphates, lithium cobalt phosphates, and lithium nickel phosphates.

The positive electrode active material may include a lithium nickel oxide having a layered rock salt-type crystal structure. The proportion of Ni to the metal elements contained in the lithium nickel oxide except for Li may be 50 at% or more. The lithium nickel oxide may include an additional transition metal. The lithium nickel oxide is useful for achieving a high operating voltage.

The lithium nickel oxide may be represented by the following composition formula (I). The element M1 is at least one selected from the group consisting of V, Co, and Mn. The element M2 is at least one selected from the group consisting of Mg, Al, Ca, Ti, Cu, Zn, and Nb. The composition formula (I) satisfies 0.9 ≤ α ≤ 1.10, -0.05 ≤ β ≤ 0.05, 0.5 ≤ x1 < 1, 0 ≤ x2 ≤ 0.5, and 0 < 1-x1-x2 ≤ 0.5.

Li_{α}Niₓ₁M1ₓ₂M2₍₁₋ₓ₁₋ₓ₂₎O_{2+β} (I)

The positive electrode active material layer 5b may include other materials such as a conductive additive and a binder.

The conductive additive is used to reduce the resistance of the positive electrode 5. Examples of the conductive additive include a carbon material and a conductive polymer compound. Examples of carbon materials include carbon black, graphite, acetylene black, carbon nanotubes, carbon nanofibers, graphene, fullerenes, and graphite oxide. Examples of conductive polymer compounds include polyaniline, polypyrrole, and polythiophene.

The binder is used to enhance the binding properties of the materials constituting the positive electrode 5. The binder can be a polymer material, such as polyvinylidene fluoride, a vinylidene fluoride-hexafluoropropylene copolymer, a vinylidene fluoride-tetrafluoroethylene copolymer, polytetrafluoroethylene, carboxymethylcellulose, polyacrylic acid, styrene-butadiene copolymer rubber, polypropylene, polyethylene, or polyimide.

As the negative electrode current collector 6a, a sheet or film formed of a metal material such as stainless steel, nickel, copper, or an alloy of any of these can be used. The sheet or film may be porous or non-porous. As the sheet or film, a metal foil, a metal mesh, or the like is used. A carbon material, such as carbon, as a conductive auxiliary material may be applied to the surface of the negative electrode current collector 6a.

The negative electrode active material layer 6b includes a negative electrode active material. The negative electrode active material can be a material capable of occluding and releasing lithium ions. The negative electrode active material includes, for example, at least one selected from the group consisting of a carbon material and a material capable of forming an alloy with lithium. Examples of the carbon material include graphite. Examples of the material capable of forming an alloy with lithium include silicon, a silicon-containing oxide, tin, a zinc alloy, bismuth, and germanium. One selected from these negative electrode active materials may be used, or two or more selected from these negative electrode active materials may be used in combination.

The negative electrode active material layer 6b may include, as the negative electrode active material, at least one selected from the group consisting of graphite and silicon. The negative electrode active material layer 6b may include only graphite as the negative electrode active material. Graphite is recommended because graphite is less susceptible to deterioration even after repeated charging and discharging at deep depths. A carbon material other than graphite may be used as the negative electrode active material. Silicon exhibits higher capacity than graphite and is accordingly advantageous for increasing the capacity of the secondary battery 100.

The negative electrode active material layer 6b may include other materials such as a conductive additive and a binder. The materials that can be used as the conductive additive and the binder in the positive electrode active material layer 5b can also be used in the negative electrode active material layer 6b.

The electrolyte solution is the nonaqueous electrolyte solution according to Embodiment 1. The positive electrode 5, the negative electrode 6, and the separator 7 are impregnated with the electrolyte solution. The electrolyte solution may fill the interior space of the container 1. The action of the electrolyte solution allows lithium ions to migrate between the positive electrode 5 and the negative electrode 6.

The average particle diameter of the particles of the phosphorus-containing compound contained in the electrolyte solution may be equal to or smaller than the pore diameter of the separator 7.

The separator 7 has lithium-ion conductivity. The material of the separator 7 may be any material through which lithium ions are allowed to pass. The material of the separator 7 can be at least one selected from the group consisting of a gel electrolyte, an ion exchange resin membrane, a semipermeable membrane, and a porous membrane. When the separator 7 is formed of any of these materials, the safety of the secondary battery 100 can be sufficiently ensured. Examples of the gel electrolyte include gel electrolytes containing a fluororesin, such as PVdF. Examples of the ion exchange resin membrane include cation exchange membranes and anion exchange membranes. Examples of the porous membrane include porous membranes made of a polyolefin resin and porous membranes containing glass paper obtained by weaving glass fibers into a nonwoven fabric. By using the nonaqueous electrolyte solution according to Embodiment 1 in the secondary battery 100, the oxidation of the separator 7 is suppressed, and thus a decrease in the strength of the separator 7 can be reduced.

The container 1 is, for example, a container made of a metal such as aluminum or stainless steel. The container 1 may have a cylindrical shape or a prismatic shape.

The electrode group 4 may be wound in a cylindrical shape or an elliptical shape.

The secondary battery 100 is not limited to any particular shape. In the present disclosure, as an example of the structure of the nonaqueous electrolyte secondary battery according to Embodiment 2, the configuration example shown in FIG. 1 is described. In this configuration example, a secondary battery includes an electrode group, in which a positive electrode and a negative electrode are wound with a separator interposed therebetween, and an electrolyte solution, both of which are housed in an outer casing. However, the secondary battery according to the present disclosure is not limited to this configuration example. The secondary battery according to the present disclosure may be in any form, such as a cylindrical type, a prismatic type, a coin type, a button type, or a laminated type. Furthermore, as the electrode group in the secondary battery according to the present disclosure, the wound-type electrode group may be replaced with any other type of electrode group, such as a stacked-type electrode group in which a positive electrode and a negative electrode are stacked with a separator interposed therebetween.

The application of the nonaqueous electrolyte solution of the present disclosure is not limited to the secondary battery 100. The nonaqueous electrolyte solution of the present disclosure can be applied to various secondary batteries in addition to lithium secondary batteries, such as sodium secondary batteries and magnesium secondary batteries.

### (Other Embodiments)

### (Supplementary Description)

From the description of the above embodiments, the following techniques are disclosed.

### (Technique 1)

A nonaqueous electrolyte solution including:
a nonaqueous solvent;
particles of a phosphorus-containing compound insoluble in the nonaqueous solvent; and
a polymer dissolved in the nonaqueous solvent.

According to Technique 1, a nonaqueous electrolyte solution having enhanced dispersion stability can be provided.

### (Technique 2)

The nonaqueous electrolyte solution according to Technique 1, wherein the polymer includes a boronic acid ester structure in a repeating unit. According to such a configuration, an effect of suppressing the settling of the particles of the phosphorus-containing compound can be expected due to an electrostatic interaction between boron contained in the boronic acid ester structure and oxygen atoms contained in the phosphorus-containing compound.

### (Technique 3)

The nonaqueous electrolyte solution according to Technique 1 or 2, wherein the polymer includes a structure represented by the following formula (1). When the polymer includes such a structure, an effect of suppressing the settling of the particles of the phosphorus-containing compound can be sufficiently achieved. 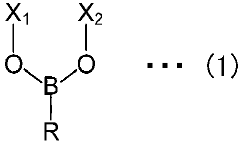 In the formula (1), at least one selected from the group consisting of X₁ and X₂ represents a bond to a carbon atom contained in the polymer, when only X₁ represents a bond to a carbon atom contained in the polymer, X₂ is a hydrogen atom of a hydroxy group, and R is an optionally substituted alkyl group or an optionally substituted aryl group.

### (Technique 4)

The nonaqueous electrolyte solution according to Technique 3, wherein R in the formula (1) is represented by the following formula (2). When the polymer includes such a structure, an effect of suppressing the settling of the particles of the phosphorus-containing compound can be sufficiently achieved. 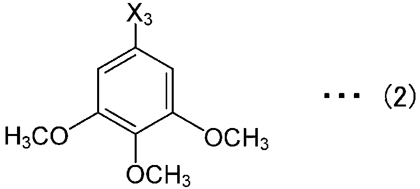 In the formula (2), X₃ represents a bond to a boron atom.

### (Technique 5)

The nonaqueous electrolyte solution according to any one of Techniques 1 to 4, wherein the polymer has a weight-average molecular weight in a range of 10,000 to 600,000. When the weight-average molecular weight of the polymer is in such a range, the polymer can be easily dissolved in the nonaqueous solvent.

### (Technique 6)

The nonaqueous electrolyte solution according to any one of Techniques 1 to 5, wherein a content of the polymer in the nonaqueous electrolyte solution is in a range of 0.1 mass% to 5 mass%. By adjusting the content of the polymer to a desired range, an effect of suppressing the settling of the particles of the phosphorus-containing compound is enhanced.

### (Technique 7)

The nonaqueous electrolyte solution according to any one of Techniques 1 to 6, wherein the phosphorus-containing compound includes at least one selected from the group consisting of Li₃PO₄, Na₃PO₄, LiPO₃, LiPO₃F, metaphosphoric acid, and P₂O₅. According to these phosphorus-containing compounds, the cycle characteristics of a battery can be enhanced.

### (Technique 8)

The nonaqueous electrolyte solution according to any one of Techniques 1 to 7, wherein the phosphorus-containing compound includes Li₃PO₄. According to the above configuration, the cycle characteristics of a battery can be enhanced.

### (Technique 9)

The nonaqueous electrolyte solution according to any one of Techniques 1 to 8, wherein a content of the particles in the nonaqueous electrolyte solution is 0.1 vol% or more and 10 vol% or less. According to the above configuration, favorable dispersibility of the particles of the phosphorus-containing compound and favorable fluidity of the nonaqueous electrolyte solution can be achieved.

### (Technique 10)

The nonaqueous electrolyte solution according to any one of Techniques 1 to 9, wherein an average particle diameter of the particles is 1 nm or more and 500 nm or less. According to the above configuration, the particles of the phosphorus-containing compound in the nonaqueous electrolyte solution have enhanced dispersibility, making it possible to enhance the industrial productivity of the nonaqueous electrolyte solution.

### (Technique 11)

A nonaqueous electrolyte secondary battery including the nonaqueous electrolyte solution according to any one of Techniques 1 to 10.

### EXAMPLES

Effects exerted by the particles of the phosphorus-containing compound are described with reference to Reference Examples 1 to 4.

### (Reference Example 1)

### (Preparation of Nonaqueous Electrolyte Solution)

Ethylene carbonate (EC), ethyl methyl carbonate (EMC), and dimethyl carbonate (DMC) were mixed in a volume ratio of EC:EMC:DMC = 20:5:75 to prepare a nonaqueous solvent. In the nonaqueous solvent thus obtained, LiPF₆ was dissolved to a concentration of 1 mol/L to obtain a solution. An amount of 15 g of the solution obtained, 1.2 g of Li₃PO₄ particles (average particle diameter: 10 µm) as the particles of the phosphorus-containing compound, and 70 g of ZrO₂ balls (average particle diameter: 0.5 mm) as a mixing medium were introduced into a ball mill and mixed at 300 rpm for 2 hours. The average particle diameter of the Li₃PO₄ particles after mixing was 50 nm. The supernatant liquid of the resulting liquid mixture was drawn off using a pipette to remove the ZrO₂ balls, and thus the nonaqueous electrolyte solution of Reference Example 1 was obtained. In the nonaqueous electrolyte solution of Reference Example 1, the Li₃PO₄ particles were dispersed at 4 vol%. The nonaqueous electrolyte solution of Reference Example 1 exhibited fluidity at 25°C.

### (Reference Example 2)

The nonaqueous electrolyte solution of Reference Example 2 was obtained in the same manner as in Reference Example 1, except that 0.6 g of Li₃PO₄ particles (average particle diameter: 10 µm) as the particles of the phosphorus-containing compound were introduced into a ball mill.

### (Reference Example 3)

The nonaqueous electrolyte solution of Reference Example 3 was obtained in the same manner as in Reference Example 1, except that 0.3 g of Li₃PO₄ particles (average particle diameter: 10 µm) as the particles of the phosphorus-containing compound were introduced into a ball mill.

### (Reference Example 4)

EC, EMC, and DMC were mixed in a volume ratio of EC:EMC:DMC = 20:5:75 to prepare a nonaqueous solvent. In the nonaqueous solvent thus obtained, LiPF₆ was dissolved to a concentration of 1 mol/L, and thus the nonaqueous electrolyte solution of Reference Example 4 was obtained. That is, the nonaqueous electrolyte solution of Reference Example 4 was prepared in the same manner as in Reference Example 1, except that the particles of the phosphorus-containing compound were not included.

### [Fabrication of Test Cells]

Respective test cells were fabricated using the nonaqueous electrolyte solutions of Reference Examples 1 to 4 by the following procedure.

A positive electrode active material having the composition Li(Ni_{0.6}Co_{0.2}Mn_{0.2})O₂, acetylene black (AB), and polyvinylidene fluoride (PVDF) were stirred with the addition of N-methyl-2-pyrrolidone (NMP) to prepare a positive electrode slurry. The mass ratio of these materials in the positive electrode active material layer was positive electrode active material:AB:PVDF = 96:2:2.

The positive electrode slurry was applied to the surface of an aluminum foil (1.45 cm × 1.45 cm), and the resulting coating film was dried and then rolled to form the positive electrode active material layer. Thus, the positive electrode was obtained.

Laminated half-cells were fabricated using the positive electrode, a Li metal foil (2 cm × 2 cm, thickness: 200 µm) as the counter electrode, a separator, and the nonaqueous electrolyte solution of each of Reference Examples 1 to 4. The separator used was a polyethylene separator (#2320, manufactured by Celgard, LLC).

Thus, the evaluation cells of Reference Examples 1 to 4 were obtained.

### [Cycle Test]

A cycle test was performed on the evaluation cells of Reference Examples 1 to 4 by the following procedure. At an ambient temperature of 55°C, the evaluation cells of Reference Examples 1 to 4 were subjected to a constant-current charge at a current value of 0.3C until the voltage reached 4.7 V. Subsequently, a constant-current discharge was performed at a current value of 0.3C until the voltage reached 2.5 V. The above-described charge and discharge were defined as one cycle, and this was repeated 43 times to evaluate the capacity retention. The evaluation results are shown in Table 1.

### [Evaluation of Separator Strength]

The evaluation cells of Reference Examples 1 to 4 were subjected to a trickle test by the following procedure, followed by a piercing test on the separator.

### (Trickle Test)

At an ambient temperature of 55°C, the evaluation cells of Reference Examples 1 to 4 were subjected to a constant-current charge at a current value of 0.3C until the voltage reached 4.7 V, and subsequently, the voltage of 4.7 V was maintained for 72 hours.

### (Piercing Test on Separator)

The evaluation cells of Reference Examples 1 to 4 after the trickle test were each disassembled to remove the separator. From the removed separator, one test piece measuring 20 mm × 20 mm was cut out. For each reference example, five such test pieces were prepared. The test piece was fixed in a jig and pierced, from the surface facing the positive electrode, with a needle having a diameter of 1.0 mm and a hemispherical tip with a radius of 0.5 mm, at a test speed of 50 ± 5 mm/min. The maximum force [N] required for the needle to penetrate the test piece was measured. The above measurement was performed on all the test pieces, and the average value was determined as the separator strength. The evaluation results are shown in Table 1. As a result of the same piercing test performed on the separator before the trickle test, the separator strength was 4.0 N.

In Table 1, the capacity retention is expressed as a relative value, with the capacity at the 1st cycle of each test cell taken as 100%. The separator strength retention is the ratio (%) of the separator strength of Reference Examples 1 to 4 after the trickle test to the separator strength before the trickle test (4.0 N).

**[Table 1]**

| | Capacity retention (%) | Separator strength retention (%) |
|---|---|---|
| Reference Example 1 | 77 | 96 |
| Reference Example 2 | 74 | 94 |
| Reference Example 3 | 70 | 91 |
| Reference Example 4 | 57 | 33 |

In the cycle test, the secondary batteries of Reference Examples 1 to 3 exhibited enhanced capacity retention compared with the secondary battery of Reference Example 4. The separator of Reference Example 4 exhibited a decrease in strength after the trickle test relative to before the test, whereas the separators of Reference Examples 1 to 3 exhibited almost no decrease in strength. Here, the strength of the separator decreases as the number of double bonds increases due to dehydrogenation reactions caused by oxidation. The above results demonstrate that oxidation of the solvent and the separator was suppressed in the evaluation cells of Reference Examples 1 to 3.

### [Synthesis of Polymer A]

Using a fluororesin container, PVA having an average degree of polymerization of 500 and 1-methyl-2-pyrrolidone (NMP) were mixed to prepare a liquid mixture. The container was placed on a hot plate in an Ar glove box, and the liquid mixture was heated and stirred at 100°C and 350 rpm for 24 hours to dissolve the PVA in the NMP, and thus a solution was obtained. To the solution obtained, 3,4,5-trimethoxyphenylboronic acid was added, and the solution was heated and stirred at 100°C for 12 hours. Thus, a solution containing Polymer A was obtained. The ratio of the 3,4,5-trimethoxyphenylboronic acid to the PVA was adjusted such that the amount of substance of hydroxy groups contained in the PVA was equal to the amount of substance of hydroxy groups contained in the 3,4,5-trimethoxyphenylboronic acid.

The solution containing Polymer A was applied to a fluororesin Petri dish to form a coating film. The Petri dish was placed on a hot plate, and the coating film was heated at 70°C for 36 hours to remove the solvent. Further, using a vacuum dryer in a dry room, the coating film was vacuum-dried at 60°C for 24 hours. Thus, a thin film of Polymer A was obtained.

### [Synthesis of Polymer B]

A thin film of Polymer B was prepared in the same manner as for Polymer A, except that PVA having an average degree of polymerization of 3,500 was used in place of PVA having an average degree of polymerization of 500.

### (Sample 1)

Ethylene carbonate (EC), ethyl methyl carbonate (EMC), and dimethyl carbonate (DMC) were mixed in a volume ratio of EC:EMC:DMC = 20:5:75 to prepare a nonaqueous solvent. In the nonaqueous solvent, LiPF₆ was dissolved to a concentration of 1 mol/L, after which vinylene carbonate (VC) was added to a concentration of 2 mass% and dissolved by stirring. An amount of 15 mL of the solution thus obtained, 2 vol% of Li₃PO₄ particles (average particle diameter: 10 µm) as the particles of the phosphorus-containing compound, and 70 g of ZrO₂ balls (average particle diameter: 0.5 mm) as a mixing medium were introduced into a ball mill and mixed at 300 rpm for 2 hours. The average particle diameter of the Li₃PO₄ particles after mixing was 50 nm. The supernatant liquid of the resulting liquid mixture was drawn off using a pipette to remove the ZrO₂ balls, and thus the nonaqueous electrolyte solution of Sample 1 was obtained. In the nonaqueous electrolyte solution of Sample 1, the Li₃PO₄ particles were dispersed at 2 vol%.

### (Sample 2)

The nonaqueous electrolyte solution of Sample 2 was prepared by adding 0.5 mass% of Polymer A during preparation of the nonaqueous electrolyte solution of Sample 1 using the ball mill. It was visually observed that a portion of the polymer remained undissolved in the nonaqueous electrolyte solution of Sample 2. The content of Polymer A in the nonaqueous electrolyte solution of Sample 2 was less than 0.5 mass%.

### (Sample 3)

The nonaqueous electrolyte solution of Sample 3 was prepared by adding 1.0 mass% of Polymer A during preparation of the nonaqueous electrolyte solution of Sample 1 using the ball mill. It was visually observed that a portion of the polymer remained undissolved in the nonaqueous electrolyte solution of Sample 3. The content of Polymer A in the nonaqueous electrolyte solution of Sample 3 was less than 1.0 mass%.

### (Sample 4)

Ethylene carbonate (EC), ethyl methyl carbonate (EMC), and dimethyl carbonate (DMC) were mixed in a volume ratio of EC:EMC:DMC = 20:5:75 to prepare a nonaqueous solvent. In the nonaqueous solvent, LiPF₆ was dissolved to a concentration of 1 mol/L, after which Polymer A was added to give 0.5 mass%, and these were mixed. Using a hot plate, the solution was heated and stirred at 60°C and 150 rpm for 4 hours to dissolve Polymer A, and then cooled to room temperature. It was visually confirmed that no portion of Polymer A remained undissolved in the solution.

Next, vinylene carbonate (VC) was added to the solution to a concentration of 2 mass% and dissolved by stirring. An amount of 15 mL of the solution thus obtained, 2 vol% of Li₃PO₄ particles (average particle diameter: 10 µm) as the particles of the phosphorus-containing compound, and 70 g of ZrO₂ balls (average particle diameter: 0.5 mm) as a mixing medium were introduced into a ball mill and mixed at 300 rpm for 2 hours. The average particle diameter of the Li₃PO₄ particles after mixing was 50 nm. The supernatant liquid of the resulting liquid mixture was drawn off using a pipette to remove the ZrO₂ balls, and thus the nonaqueous electrolyte solution of Sample 4 was obtained. In the nonaqueous electrolyte solution of Sample 4, the Li₃PO₄ particles were dispersed at 2 vol%.

The concentration of Polymer A and the concentration of VC are each the concentration at the time of addition to the nonaqueous electrolyte solution.

### (Sample 5)

The nonaqueous electrolyte solution of Sample 5 was prepared in the same manner as in Sample 4, except that the amount of Polymer A added was changed to give a concentration of 1.0 mass%. In the process of preparing the nonaqueous electrolyte solution of Sample 5, it was also visually confirmed that no portion of Polymer A remained undissolved in the solution.

### (Sample 6)

The nonaqueous electrolyte solution of Sample 6 was prepared in the same manner as in Sample 4, except that Polymer B was used in place of Polymer A. In the process of preparing the nonaqueous electrolyte solution of Sample 6, it was visually observed that a portion of Polymer B remained undissolved in the solution before treatment using the ball mill.

### (Sample 7)

The nonaqueous electrolyte solution of Sample 7 was prepared in the same manner as in Sample 6, except that the amount of Polymer B added was changed to give a concentration of 1.0 mass%. In the process of preparing the nonaqueous electrolyte solution of Sample 7, it was visually observed that a portion of Polymer B remained undissolved in the solution before treatment using the ball mill.

### [Evaluation of Dispersion Stability of Nonaqueous Electrolyte Solutions]

The nonaqueous electrolyte solutions of Samples 1 to 7 were each placed in a transparent glass container and allowed to stand, and the dispersion state of the Li₃PO₄ particles was visually evaluated after 24 hours and after 1 week. The evaluation criteria are as follows. The results are shown in Table 2. At the time of being placed in the glass container, each of the nonaqueous electrolyte solutions of Samples 1 to 7 was a uniformly turbid white solution.
- Poor: After 24 hours, a transparent supernatant layer was observed.
- Good: After 24 hours, no transparent supernatant layer was observed. After 1 week, either a transparent supernatant layer was observed or sediment was observed at the bottom of the container.
- Excellent: After 1 week, neither a transparent supernatant layer nor sediment was observed.

**[Table 2]**

| | Polymer type | Polymer concentration (mass%) | Evaluation of dispersion stability |
|---|---|---|---|
| Sample 1 | - | - | Poor |
| Sample 2 | A | 0.5 | Good |
| Sample 3 | A | 1.0 | Good |
| Sample 4 | A | 0.5 | Excellent |
| Sample 5 | A | 1.0 | Excellent |
| Sample 6 | B | 0.5 | Good |
| Sample 7 | B | 1.0 | Good |

In Sample 1, a transparent supernatant layer was observed after 24 hours. In Samples 2, 3, and 6, a transparent supernatant layer was observed after 1 week. In Sample 7, sediment was observed at the bottom of the container after 1 week. In Samples 4 and 5, neither a supernatant layer nor sediment was observed even after 1 week, and the Li₃PO₄ particles were in a favorable dispersion state.

### INDUSTRIAL APPLICABILITY

The technique of the present disclosure is useful, for example, in lithium-ion secondary batteries.

## Claims

1. A nonaqueous electrolyte solution comprising:
a nonaqueous solvent;
particles of a phosphorus-containing compound insoluble in the nonaqueous solvent; and
a polymer dissolved in the nonaqueous solvent.

2. The nonaqueous electrolyte solution according to claim 1, wherein
the polymer comprises a boronic acid ester structure in a repeating unit.

3. The nonaqueous electrolyte solution according to claim 1, wherein
the polymer comprises a structure represented by the following formula (1): 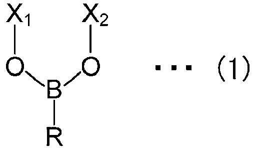
in the formula (1), at least one selected from the group consisting of X₁ and X₂ represents a bond to a carbon atom contained in the polymer,
when only X₁ represents a bond to a carbon atom contained in the polymer, X₂ is a hydrogen atom of a hydroxy group, and
R is an optionally substituted alkyl group or an optionally substituted aryl group.

4. The nonaqueous electrolyte solution according to claim 3, wherein
R in the formula (1) is represented by the following formula (2): 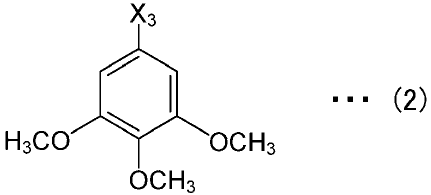
in the formula (2), X₃ represents a bond to a boron atom.

5. The nonaqueous electrolyte solution according to claim 1, wherein
the polymer has a weight-average molecular weight in a range of 10,000 to 600,000.

6. The nonaqueous electrolyte solution according to claim 1, wherein
a content of the polymer in the nonaqueous electrolyte solution is in a range of 0.1 mass% to 5 mass%.

7. The nonaqueous electrolyte solution according to claim 1, wherein
the phosphorus-containing compound comprises at least one selected from the group consisting of Li₃PO₄, Na₃PO₄, LiPO₃, LiPO₃F, metaphosphoric acid, and P₂O₅.

8. The nonaqueous electrolyte solution according to claim 1, wherein
the phosphorus-containing compound comprises Li₃PO₄.

9. The nonaqueous electrolyte solution according to claim 1, wherein
a content of the particles in the nonaqueous electrolyte solution is 0.1 vol% or more and 10 vol% or less.

10. The nonaqueous electrolyte solution according to claim 1, wherein
an average particle diameter of the particles is 1 nm or more and 500 nm or less.

11. A nonaqueous electrolyte secondary battery comprising the nonaqueous electrolyte solution according to any one of claims 1 to 10.
